# FASCICULE DE BREVET EUROPEEN

(11) **EP 0 537 056 B1**
(45) Date de publication et mention de la délivrance du brevet: **08.05.1996**
(21) Numéro de dépôt: 92402695.8
(22) Date de dépôt: 02.10.1992
(51) Int. Cl.: G01S 7/292

(54) **Procédé de réduction des fausses alarmes dans un radar**
Verfahren zur Verminderung falscher Alarme in einem Radar
Method to reduce false alarms in a radar

(30) Priorité: 11.10.1991 FR 9112567
(43) Date de publication de la demande: 14.04.1993
(73) Titulaire: THOMSON-CSF, F-75008 Paris (FR)
(72) Inventeur: Desodt, Guy, F-92045 Paris la Defense (FR); Larvor, Jean-Pierre, F-92045 Paris la Defense (FR)
(74) Mandataire: Benoit, Monique

(56) Documents cités:
- US-A- 4 503 432
- US-A- 4 837 579
- I.E.E. PROCEEDINGS-F/COMMUNICATIONS, RADAR & SIGNAL PROCESSING, PART F vol. 135, no. 3, Juin 1988, Stevenage, GB, pp. 193-198; EMAD D. AL-HUSSAINI: 'Peformance of the greater-of and censored greater-of detectors in multiple target environments'
- ONZIèME COLLOQUE SUR LE TRAITEMENT DU SIGNAL ET DES IMAGES Juin 1987, Nice, FR, pp. 123-126; HERMANN ROHLING: 'Robust algorithms for point target detection in different background situations'
- IEE TRANS. ON AEROSPACE AND ELECTRONIC SYSTEMS vol.15,no 5,Septembre 1979,NY US pages 719-723 RAMON NITZBERG 'Low-Loss Almost Constant False-Alarm Rate Processors'

## Description

L'invention se situe dans le domaine des procédés destinés à réduire le taux de fausses alarmes d'un récepteur radar en particulier en présence de bruit de fouillis de mer.

On sait qu'un récepteur radar comporte un détecteur constitué par un comparateur qui compare le niveau du signal reçu à un niveau de référence dit seuil de détection. En principe, un niveau de signal supérieur à ce seuil correspond à la réception d'un écho en provenance d'une cible.

On sait aussi que le niveau de bruit ambiant étant aléatoire, il peut arriver qu'un signal ne contenant que du bruit soit suffisamment important pour, à lui seul, dépasser le seuil de détection, provoquant alors ce qu'on appelle une fausse alarme. Afin de limiter la probabilité d'avoir une fausse alarme, les procédés connus consistent à relever le seuil de détection en fonction du bruit.

Le problème est alors de relever suffisamment le seuil pour ne pas avoir un taux de fausse alarme supérieur à un taux fixé, mais pas trop, pour continuer à détecter les échos.

En particulier en ce qui concerne les bruits de fouillis (clutter) et plus particulièrement les bruits de fouillis dûs à la mer pour les radars de surface embarqués, on a essayé d'exploiter la stationnarité spatiale de ces bruits. Dans ce type d'exploitation, on considère que dans une zone donnée, définie par son site, le bruit de fouillis est moyennement constant. La valeur moyenne que l'on retient peut être soit la valeur maximum de moyennes partielles suivant un découpage pré-établi des zones distances, ou encore la valeur selon la méthode du kième plus grand échantillon. Selon cette méthode applicable aux signaux vidéo convertis numériquement par échantillonage, on admet que les n-k moins grands échantillons ne contiennent que du bruit et ce sont ces échantillons que l'on retient pour le calcul du bruit.

On a également essayé d'exploiter la stationnarité temporelle dans une zone de tour d'antenne à tour d'antenne. On considère dans ce cas que pour une zone donnée, définie par sa distance et son site, le bruit n'est que lentement variable, en sorte que l'on peut considérer que sa moyenne peut êtres considérée comme la valeur moyenne enregistrée sur un certain nombre de tour d'antenne.

Que l'on considère la stationnarité spatiale ou temporelle des variantes de mise en oeuvre existent, ainsi en ce qui concerne la grandeur caractérisant le signal dont on fera la moyenne, on peut considérer :
- le module du signal (son amplitude)
- le module au carré du signal (sa puissance)
- le logarithme du module

En ce qui concerne les zones, on peut calculer les moyennes sur des zones se recouvrant partiellement l'une l'autre du type fenêtre glissante ou au contraire, s'excluant l'une l'autre de type bloc.

Enfin, en ce qui concerne le-réglage du-seuil pour une zone donnée, on pourra prendre en considération soit la valeur moyenne obtenue sur cette zoner soit la valeur moyenne obtenue sur une ou plusieurs zones immédiatement adjacentes en excluant la zone en cours d'examen.

Les procédés de l'art antérieur, qui viennent d'être décrits, ne sont satisfaisants que dans la mesure où il y a effectivement stationnarité spatiale ou temporelle du bruit de fouillis. Or, il ressort de mesures effectuées par le demandeur, que la stationnarité supposée n'existe pas, en particulier en présence de mer forte.

Sur mer forte, les échos obtenus ne sont pas stationnaires en distance, il existe des pointes de fouillis de mer qui ressortent dans une cellule distance par rapport aux cellules voisines. Ils ne sont pas davantage stationnaires dans le temps, les pointes ne se produisant pas aux mêmes endroits d'un tour d'antenne à l'autre. En conséquence, les régulations de fausse alarme basées sur la stationnarité temporelle ou spatiale ne sont pas totalement efficaces.

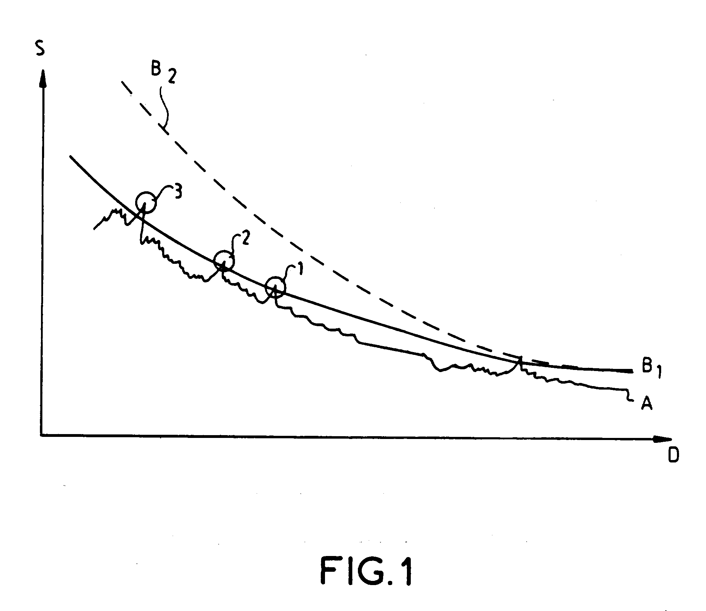

Un des buts de la présente invention est de rendre plus efficace la régulation de fausse alarme par relèvement du seuil de détection en relevant ce seuil de la quantité juste nécessaire pour se retrouver au dessus de la valeur des pointes extrêmes, en particulier lorsque la mer est forte. Le but poursuivi par l'invention est illustré sur la figure 1.

La figure 1 représente une courbe A, une courbe B₁ et une courbe B₂.

La courbe A représente un exemple fictif mais réaliste de niveau de bruit sur un axe distance, les zones proches étant plus bruyantes que les zones lointaines. La courbe B₁ représente la valeur dont il convient de relever le seuil selon les critères de stationnarité du bruit.

La courbe B₁ est obtenue par lissage de la courbe A et addition d'une valeur constante de niveau. On voit que cette façon de faire laisse subsister des pointes de bruit 1,2,3, qui donneront lieu à une fausse alarme. Le but de la présente invention est de substituer à la courbe B₁, la courbe B₂ qui, pour les faibles niveaux de bruit, se confond avec la courbe B₁et qui s'en éloigne de façon monotone croissante avec le niveau du bruit de fouillis mesuré sur la zone. La mesure du bruit de fouillis continue à être effectuée selon l'une des méthodes connues. Le but de l'invention est aussi d'éviter la désensibilisation du récepteur radar qui résulterait d'un relèvement trop important du seuil de détection.

Il est aussi de réaliser une adaptation aisée de l'invention aux radars existants.

A toutes ces fins l'invention a pour objet un procédé de réglage du seuil de détection d'un récepteur radar équipé d'un module permettant le calcul de la valeur moyenne en fonction de la distance du bruit d'ambiance le long d'un axe partant du récepteur pour une zone distance dite zone de recherche entourée de zones distances dites adjacentes, caractérisé en ce que pour chaque zone distance de recherche, on relève le seuil de détection d'une valeur nulle lorsque le bruit d'ambiance est faible et d'une valeur qui est monotone croissante avec le niveau du bruit mesuré lorsque le bruit d'ambiance est supérieur à un seuil fixé.

Le procédé qui vient d'être décrit correspond aux procédés connus qui retenaient pour critère la stationnarité spatiale du bruit. En ce qui concerne la stationnarité temporelle, l'invention est relative à un procédé de réglage du seuil de détection d'un récepteur radar équipé d'une antenne tournante et d'un module de calcul permettant le calcul de la valeur moyenne du bruit d'ambiance sur une zone localisée par son site et sa distance par rapport au radar, la zone comportant en distance une zone dite de recherche et des zones adjacentes, la moyenne du bruit étant calculée de façon itérative de tour d'antenne à tour d'antenne, caractérisé en ce que pour chaque zone de recherche on relève le seuil de détection d'une valeur nulle lorsque le bruit d'ambiance est faible, et d'une valeur monotone croissante avec le niveau de bruit mesuré lorsque ce bruit est supérieur à un certain seuil.

Les zones distances, qu'elles soient de recherche ou adjacentes, sont mesurées en pas distance du radar.

Lorsque le radar est un radar doppler, la valeur du bruit sur chaque porte distance est calculée pour chacune des portes fréquence doppler en sortie des filtres doppler.

L'invention telle que décrite est applicable à tout type de radar. La valeur dont il convient de relever le seuil en fonction du niveau du bruit d'ambiance devra être déterminée par expérimentation préalable pour chaque type de radar. La hauteur de l'antenne au dessus du niveau de la mer est aussi une variable à prendre en compte si un même type de radar est embarqué sur des bâtiments différents.

La valeur de relèvement du seuil est variable avec la fréquence d'emission, le type de polarisation, la forme du diagramme d'antenne, le type de mer (chaude, froide, fermée, océan) et l'état de la mer. Pour bien appliquer le procédé selon l'invention, il conviendra donc d'effectuer par zone géographique, éventuellement par saison et par type de radar et de bâtiment, des mesures pour connaître le niveau des fausses alarmes lorsque le seuil de détection est situé juste au dessus de la valeur moyenne de bruit calculée. La constante qui est apparue est que le niveau des signaux engendrant des fausses alarmes est d'autant plus fort que la mer est localement forte.

Ces niveaux pourront alors être enregistrés par zone géographique et par état de mer puis mémorisés.

De façon plus précise, l'invention est donc relative à un procédé de réglage continu du seuil de détection d'un récepteur radar équipé d'un module permettant le calcul de la valeur moyenne du bruit d'ambiance caractérisé en ce que on relève le seuil de détection d'une valeur qui est pré-enregistrée et qui est une fonction du niveau de bruit ambiant mesuré.

Naturellement, rien n'empêche de caractériser l'ambiance non seulement par une valeur moyenne mais aussi par d'autres variables, par exemple l'écart type du niveau du bruit par rapport à la valeur moyenne mesurée.

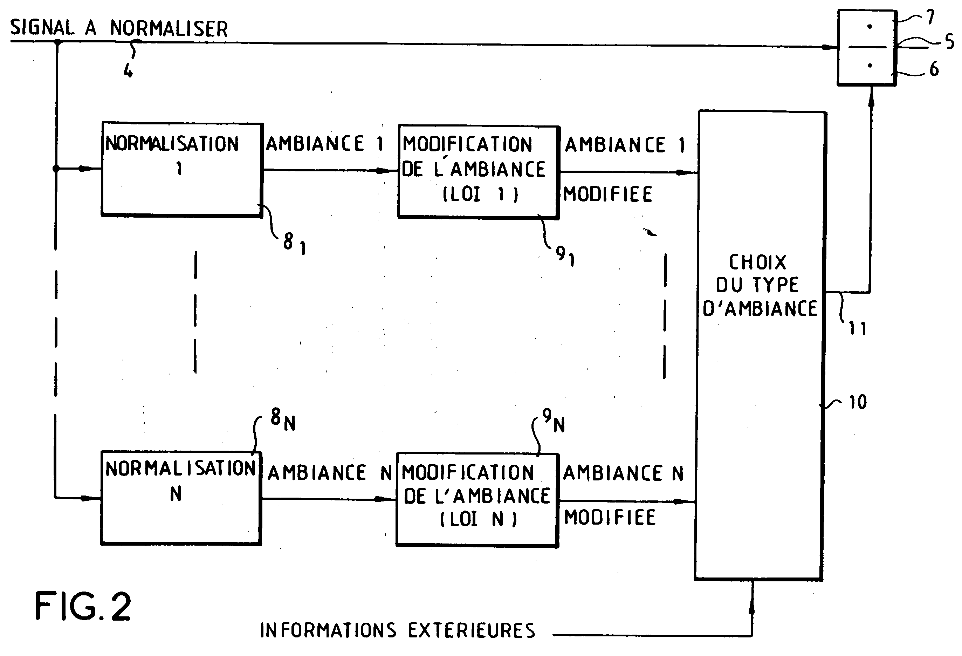

Un exemple particulier de réalisation sera maintenant décrit en référence à la figure 2 qui représente le mode d'implantation du procédé dans un radar comportant plusieurs (N) procédés de régulation de fausses alarmes mis en parallèle et regroupés par un organe de choix automatique.

La figure 2 représente la partie d'un récepteur radar situé juste avant un détecteur. Le signal traité par les éléments amonts du récepteur arrive en 4 sur un détecteur 5 comportant deux entrées 6 et 7.

Ce module agit par comparaison d'un seuil de détection reçu sur l'entrée 6 et du niveau du seuil reçu sur l'entrée 7.

Le signal arrivant en 4 est envoyé d'une part, sur l'entrée 7 du détecteur et d'autre part; vers des modules branchés en parallèle 8₁ à 8_{N}. Chacun de ces modules effectue un calcul de valeur moyenne de bruit selon une loi de calcul connue en elle-même et citée plus haut dans la partie descriptive de l'état de la technique.

En sortie de chacun de ces modules, l'ambiance peut être caractérisée par un nombre, le niveau moyen de bruit, ou plusieurs nombres, niveau moyen de bruits, écart type...

Les nombres en sortie de ces modules 8 adressent des mémoires 9₁ à 9_{N} dont chacune contient, en fonction de son adresse, une valeur de correction à appliquer au seuil d'entrée. Un module 10 sélectionne la loi de calcul retenue parmi les N possibles. Le module 10 reçoit chacune des N valeurs de correction proposées et des informations en provenance d'organes extérieurs qui déterminent de façon automatique le.choix-de la loi de calcul utilisée.

La sortie 11 du module de choix 10 alimente alors l'entrée 6 du détecteur 5 pour fixer la valeur du seuil retenue.

## Revendications

1. Procédé de réglage du seuil de détection d'un récepteur radar équipé d'un module permettant le calcul de la valeur moyenne en fonction de la distance du bruit d'ambiance le long d'un axe partant du récepteur pour une zone distance dite zone de recherche entourée de zones distances dites adjacentes, caractérisé en ce que pour chaque zone distance de recherche, on relève le seuil de détection d'une valeur nulle lorsque le bruit d'ambiance est faible et d'une valeur qui est monotone croissante avec le niveau du bruit mesuré lorsque le bruit d'ambiance est supérieur à un seuil fixé.

2. Procédé de réglage du seuil de détection d'un récepteur radar équipé d'une antenne tournante et d'un module de calcul permettant le calcul de la valeur moyenne du bruit d'ambiance sur une zone localisée par son site et sa distance par rapport au radar la zone comportant en distance une zone dite de recherche et des zones adjacentes, la moyenne du bruit étant calculée de façon itérative de tour d'antenne à tour d'antenne caractérisé en ce que pour chaque zone de recherche on relève le seuil de détection d'une valeur nulle lorsque le bruit d'ambiance est faible, et d'une valeur monotone croissante avec le niveau de bruit mesuré lorsque ce bruit est supérieur à un certain seuil.

3. Procédé selon l'une des revendications 1 ou 2 caractérisé en ce que la moyenne de bruit est calculée sur le module du signal.

4. Procédé selon l'une des revendications 1 ou 2 caractérisé en ce que la moyenne du bruit est calculée sur la valeur des carrés des modules du bruit.

5. Procédé selon l'une des revendications 1 ou 2 caractérisé en ce que la moyenne du bruit est calculée sur la valeur du logarithme du module du bruit.

6. Procédé selon l'une des revendications 1 ou 2 caractérisé en ce que la moyenne du bruit est calculée selon la méthode dite du kième plus grand.

7. Procédé selon l'une des revendications 3 à 6 caractérisé en ce que la moyenne du bruit est calculée sur les zones adjacentes à la zone de recherche en excluant la zone de recherche.

8. Procédé selon la revendication 1 ou 2 caractérisé en ce que on calcule la moyenne du bruit selon plusieurs méthodes distinctes et que l'on retient le bruit calculé sur l'une d'entre elles en fonction de critères supplémentaires, la valeur de relèvement du seuil étant déterminée par le bruit d'ambiance et la méthode de calcul de ce bruit.

## Patentansprüche

1. Verfahren zur Regelung der Erfassungsschwelle eines Radarempfängers, der einen Modul enthält, mit dem man den Mittelwert des Hintergrundrauschens abhängig von der Entfernung entlang einer vom Empfänger ausgehenden Achse für eine Entfernungszone berechnen kann, die Suchzone heißt und von benachbarten Entfernungszonen eingerahmt ist, dadurch gekennzeichnet, daß für jede Suchzone die Erfassungsschwelle um einem Wert Null angehoben wird, wenn das Hintergrundrauschen gering ist, sowie um einen mit dem gemessenen Rauschpegel stetig ansteigenden Wert, wenn das Hintergrundrauschen über einem festgelegten Schwellwert liegt.

2. Verfahren zur Regelung der Erfassungsschwelle eines Radarempfängers, der eine rotierende Antenne und einen Rechenmodul besitzt, mit dem man den Mittelwert des Hintergrundrauschens in einer durch ihre Lage und ihren Abstand bezüglich des Radargeräts lokalisierten Zone berechnen kann, wobei die Zone in Entfernungsrichtung eine gesuchte Zone und diese umrahmende Zonen aufweist und der Mittelwert des Rauschpegels iterativ von einem Antennenumlauf zum nächsten berechnet wird, dadurch gekennzeichnet, daß für jede Suchzone die Erfassungsschwelle um einen Wert Null angehoben wird, wenn das Hintergrundrauschen gering ist, sowie um einen mit dem gemessenen Rauschpegel stetig ansteigenden Wert, wenn dieser Rauschpegel über einer gewissen Schwelle liegt.

3. Verfahren nach einem der Ansprüche 1 oder 2, dadurch gekennzeichnet, daß der mittlere Rauschpegel aufgrund der Amplitude des Signals berechnet wird.

4. Verfahren nach einem der Ansprüche 1 oder 2, dadurch gekennzeichnet, daß der mittlere Rauschpegel aufgrund des Quadrats der Amplitudenwerte des Rauschpegels berechnet wird.

5. Verfahren nach einem der Ansprüche 1 oder 2, dadurch gekennzeichnet, daß der mittlere Rauschpegel aufgrund des Logarithmus der Amplitude des Rauschsignals berechnet wird.

6. Verfahren nach einem der Ansprüche 1 oder 2, dadurch gekennzeichnet, daß der Mittelwert des Rauschpegels gemäß der Methode des größenmäßig an k-ter Stelle liegenden Werts berechnet wird.

7. Verfahren nach einem der Ansprüche 3 bis 6, dadurch gekennzeichnet, daß der Mittelwert des Rauschpegels in den der Suchzone benachbarten Zonen unter Ausschluß der Suchzone berechnet wird.

8. Verfahren nach einem der Ansprüche 1 oder 2, dadurch gekennzeichnet, daß der Mittelwert des Rauschpegels gemäß mehreren unterschiedlichen Methoden berechnet wird und daß der nach einer dieser Methoden berechnete Rauschpegel abhängig von zusätzlichen Kriterien ausgewählt wird, wobei der Wert der Anhebung der Schwelle durch den Pegel des Hintergrundrauschens sowie die Methode zur Berechnung dieses Rauschsignals bestimmt wird.

## Claims

1. Method of setting the detection threshold of a radar receiver equipped with a module making it possible to calculate the mean value of the background noise as a function of range along an axis starting from the receiver for a range area called search area surrounded by range areas called adjacent areas, characterized in that for each search range area, the detection threshold is raised by a zero value when the background noise is low and by a value which increases monotonically with the measured noise level when the background noise is greater than a fixed threshold.

2. Method of setting the detection threshold of a radar receiver equipped with a rotating antenna and with a calculation module allowing calculation of the mean value of the background noise over an area which is localized by its elevation and its range with respect to the radar, the area including, in range, an area called search area and adjacent areas, the average of the noise being calculated iteratively from antenna revolution to antenna revolution, characterized in that, for each search area, the detection threshold is raised by a zero value when the background noise is low, and by a value which increases monotonically with the measured noise level when the noise is above a certain threshold.

3. Method according to one of Claims 1 or 2, characterized in that the noise mean is calculated on the modulus of the signal.

4. Method according to one of Claims 1 or 2, characterized in that the mean of the noise is calculated on the value of the squares of the moduli of the noise.

5. Method according to one of Claims 1 or 2, characterized in that the mean of the noise is calculated on the value of the logarithm of the modulus of the noise.

6. Method according to one of Claims 1 or 2, characterized in that the mean of the noise is calculated according to the method called the kth largest method.

7. Method according to one of Claims 3 to 6, characterized in that the mean of the noise is calculated on the areas adjacent to the search area, excluding the search area.

8. Method according to Claim 1 or 2, characterized in that the mean of the noise is calculated according to several separate methods and in that the noise calculated on one of them is adopted on the basis of additional criteria, the value by which the threshold is raised being determined by the background noise and the method of calculating this noise.
